# EUROPEAN PATENT APPLICATION

(11) **EP 4 510 377 A1**
(43) Date of publication of application: **19.02.2025**
(21) Application number: 22958499.0
(22) Date of filing: 16.09.2022
(51) Int. Cl.: H01M 50/627, H01M 50/593

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: ZHOU, Wenlin, Ningde, Fujian 352100 (CN); LIU, Wenzhong, Ningde, Fujian 352100 (CN); ZHOU, Jian, Ningde, Fujian 352100 (CN); LI, Quankun, Ningde, Fujian 352100 (CN)
(74) Representative: Ran, Handong
(86) International application number: PCT/CN2022/119416
(87) International publication number: WO 2024/055309

(57) **Abstract**

The present application relates to the field of batteries, and provides a battery cell, a battery, and an electrical device. The battery cell comprises a housing, an electrode assembly, an end cover assembly, and a blocking member. The housing is provided with an opening. The electrode assembly is accommodated in the housing. The end cover assembly is used for sealing the opening, and a liquid injection hole is formed in the end cover assembly. The blocking member and the end cover assembly are arranged in a split mode and the blocking member is located on the side of the end cover assembly facing the electrode assembly. The blocking member is configured to at least partially block the liquid injection hole and to allow a fluid medium to pass through the blocking member and then flow into the housing. The battery cell is provided with the blocking member capable of blocking the liquid injection hole, and at least part of the fluid medium is blocked by the blocking member after passing through the liquid injection hole, such that the fluid medium enters the housing after passing through the blocking member. The impact of the fluid medium is weakened, so that the fluid medium is not prone to impacting the electrode assembly, and short circuiting caused by inward bending of a separator is not prone to being caused. The blocking member and the end cover assembly are arranged in a split mode, so that the blocking member is not limited by the end cover assembly, and the blocking effect is improved.

## Description

### Technical Field

The present application relates to the field of batteries, and in particular, to a battery cell, a battery, and an electrical device.

### Background Art

Batteries are widely used in the field of new energy, such as electric vehicles and new energy vehicles, which have become a new trend in the development of the automotive industry. The development of battery technologies needs to consider various design factors simultaneously, such as service life, energy density, discharge capacity, charge and discharge rates, and other performance parameters of batteries. In addition, safety of the batteries also needs to be considered. However, the safety of the existing batteries is poor.

### Summary

Embodiments of the present application aim to provide a battery cell, a battery, and an electrical device to solve a problem of poor safety of batteries in the prior art.

In a first aspect, an embodiment of the present application provides a battery cell. The battery cell includes a shell, an electrode assembly, an end cover assembly, and a blocking member, where the shell has an opening; the electrode assembly is accommodated in the shell; the end cover assembly is used for closing the opening, and the end cover assembly is provided with a liquid injection hole; and the blocking member is provided separated from the end cover assembly and located on a side, facing the electrode assembly, of the end cover assembly, and the blocking member is configured to at least partially block the liquid injection hole and allow a fluid medium to flow through the blocking member to an interior of the shell.

In the foregoing technical solution, the battery cell has the blocking member that at least partially blocks the liquid injection hole, and the fluid medium is at least partially blocked by the blocking member after passing through the liquid injection hole during liquid injection, so that at least a portion of the fluid medium passes through the blocking member (to change its flow direction) before entering the interior of the shell. In this case, impact force of the fluid medium is weakened, the fluid medium is unlikely to impact the electrode assembly, and a separator is less prone to inward folding to cause a short circuit, thereby improving safety of the battery cell. The blocking member is provided separated from the end cover assembly, so that a size and structure of the blocking member are not limited by the end cover assembly. For example, the blocking member may be made larger to achieve a better blocking effect.

As an optional technical solution of the embodiments of the present application, the blocking member is configured to completely block the liquid injection hole.

In the foregoing technical solution, the fluid medium is completely blocked by the blocking member after passing through the liquid injection hole during liquid injection, so that all the fluid medium must pass through the blocking member (to change its flow direction) before entering the interior of the shell. In this case, the fluid medium is prevented from directly scouring the electrode assembly, the impact force of the fluid medium is weakened, and the separator is less prone to inward folding to cause a short circuit, thereby improving the safety of the battery cell.

As an optional technical solution of the embodiments of the present application, the blocking member abuts against the electrode assembly.

In the foregoing technical solution, the blocking member abuts against the electrode assembly, the distance between the blocking member and the electrode assembly is short, the distance of free falling of the fluid medium after passing through the blocking member and entering the interior of the shell is short, the impact force of the fluid medium is unlikely to increase again, and the fluid medium is unlikely to impact the electrode assembly, thereby improving the safety of the battery cell. In addition, in a scenario that the battery cell is inverted, the blocking member can further support the electrode assembly, so that gravity of a main body of the electrode assembly is less prone to transmission to a tab to cause bifurcate insertion of the tab, which improves the safety of the battery cell.

As an optional technical solution of the embodiments of the present application, the blocking member is spaced from the electrode assembly.

In the foregoing technical solution, since the blocking member is spaced from the electrode assembly, the fluid medium can smoothly enter the interior of the shell after passing through the blocking member, and the flowing of the fluid medium will not be blocked by the electrode assembly.

As an optional technical solution of the embodiments of the present application, the electrode assembly includes a main body and a tab protruding from the main body, and the tab is bent around the blocking member.

In the foregoing technical solution, the tab of the electrode assembly is bent around the blocking member, so that in the scenario that the battery cell is inverted, the gravity of the main body of the electrode assembly is less prone to transmission to the tab to cause bifurcate insertion of the tab, which improves the safety of the battery cell.

As an optional technical solution of the embodiments of the present application, the blocking member is provided with at least one first through hole configured to allow a fluid medium to pass therethrough, and in a thickness direction of the end cover assembly, a projection of the liquid injection hole on the blocking member does not overlap with the first through hole.

In the foregoing technical solution, in the thickness direction of the end cover assembly, the projection of the liquid injection hole on the blocking member does not overlap with the first through hole, so that the fluid medium is blocked by the blocking member after passing through the liquid injection hole to change its flow direction, and the fluid medium enters the interior of the shell through the first through hole (passing through the blocking member ) after the impact force of the fluid medium is weakened. If the projection of the liquid injection hole on the blocking member partially overlaps with the first through hole in the thickness direction of the end cover assembly, the blocking member cannot play a blocking role, the fluid medium directly enters the interior of the shell through the first through hole after passing through the liquid injection hole, and the impact force of the fluid medium cannot be weakened.

As an optional technical solution of the embodiments of the present application, the blocking member is provided with a plurality of first through holes, and the plurality of first through holes are provided surrounding the liquid injection hole.

In the foregoing technical solution, the blocking member is provided with a plurality of first through holes, and the plurality of first through holes are provided surrounding the liquid injection hole, which can increase the speed of entry of the fluid medium into the interior of the shell to improve liquid injection efficiency.

As an optional technical solution of the embodiments of the present application, the end cover assembly is provided with a pressure relief mechanism, and the blocking member has a pressure relief area opposite to the pressure relief mechanism and a liquid injection area opposite to the liquid injection hole; and the blocking member is provided with a separation portion, and the separation portion is used for separating the liquid injection area and the pressure relief area.

In the foregoing technical solution, by configuring the pressure relief area opposite to the pressure relief mechanism, the gas inside the shell flows to the pressure relief mechanism through the pressure relief area, so as to achieve pressure relief. The liquid injection area is opposite to the liquid injection hole to block the liquid injection hole. The fluid medium is blocked by the liquid injection area after passing through the liquid injection hole, so that the fluid medium can enter the interior of the shell after passing through the liquid injection area (changing the flow direction). The impact force of the fluid medium is weakened, so that the fluid medium is unlikely to impact the electrode assembly and the separator is less prone to inward folding to cause a short circuit. By configuring the separation portion to separate the pressure relief area from the liquid injection area, the fluid medium is prevented from entering the pressure relief area during liquid injection to affect a pressure relief function of the pressure relief area (if the high-temperature fluid medium enters the pressure relief area, material properties of the pressure relief area may be affected, so that the pressure relief area cannot release pressure normally).

As an optional technical solution of the embodiments of the present application, the blocking member has a body portion, at least one connecting portion and at least one wing portion, the body portion blocks the liquid injection hole, the tab is bent around the wing portion, the connecting portion connects the body portion and the wing portion, and in the thickness direction of the end cover, a surface, facing the main body, of the wing portion is further away from the main body than a surface, facing the main body, of the body portion.

In the foregoing technical solution, the body portion blocks the liquid injection hole, the fluid medium is blocked by the body portion after passing through the liquid injection hole, and the impact force of the fluid medium is weakened, so that the fluid medium is unlikely to impact the electrode assembly and the separator is less prone to inward folding to cause a short circuit. The tab of the electrode assembly is bent around the wing portion, and in the scenario where the battery cell is inverted, the body portion supports the main body of the electrode assembly, so that the gravity of the main body of the electrode assembly is less prone to transmission to the tab to cause bifurcate insertion of the tab, which improves the safety of the battery cell. In the thickness direction of the end cover, the surface, facing the main body, of the wing portion is further away from the main body than the surface, facing the main body, of the body portion. In this case, an accommodating space is formed between the wing portion and the main body, and the accommodating space is used for extending the tab to well shape the tab, so that the tab is less prone to bifurcate insertion, which improves the safety of the battery cell.

As an optional technical solution of the embodiments of the present application, the blocking member includes two connecting portions and two wing portions, the two connecting portions are located on two sides of the body portion in a first direction, and each connecting portion connects the body portion and a wing portion; and the first direction is perpendicular to the thickness direction of the end cover assembly.

In the foregoing technical solution, by configuring the two connecting portions and the two wing portions, tabs can extend out from the two sides of the body portion and bend around the two wing portions separately, so that the tabs of the electrode assembly are well shaped and protected.

As an optional technical solution of the embodiments of the present application, the first through hole is disposed at the body portion or the connecting portion.

In the foregoing technical solution, when the blocking member abuts against the electrode assembly, the first through hole may be disposed at the connecting portion to prevent the electrode assembly from blocking the first through hole and ensure that the fluid medium smoothly enters the interior of the shell. When the blocking member is spaced from the electrode assembly, the first through hole may be disposed at the body portion, the distance between the first through hole and the electrode assembly is short, the distance of free falling of the fluid medium after passing through the first through hole and entering the interior of the shell is short, the impact force of the fluid medium is unlikely to increase again, and the fluid medium is unlikely to impact the electrode assembly, thereby improving the safety of the battery cell.

As an optional technical solution of the embodiment of the present application, the blocking member further includes a first reinforcing portion; the first reinforcing portion is disposed on a side of the separation portion away from the pressure relief area in a second direction; the first reinforcing portion connects the body portion and the two connecting portions; a side, closest to the separation portion, of the first reinforcing portion, together with the separation portion, defines the liquid injection area; and any two of the first direction, the second direction, and the thickness direction of the end cover assembly are perpendicular to each other.

In the foregoing technical solution, the first reinforcing portion increases the strength of the blocking member, so that the blocking member has enough strength to support the main body when the battery cell is inverted.

As an optional technical solution of the embodiments of the present application, the blocking member further includes a second reinforcing portion; the second reinforcing portion is disposed on a side of the separation portion facing the pressure relief area in the second direction; the second reinforcing portion connects the body portion and the two connecting portions; and a side, closest to the separation portion, of the second reinforcing portion, together with the separation portion, defines the pressure relief area.

In the foregoing technical solution, the second reinforcing portion increases the strength of the blocking member, so that the blocking member has enough strength to support the main body when the battery cell is inverted.

As an optional technical solution of the embodiments of the present application, the blocking member is provided with at least one flow guide channel, and the flow guide channel is used for guiding the fluid medium towards the second direction.

In the foregoing technical solution, the flow guide channel guides the fluid medium towards the second direction, so that the fluid medium is not only concentrated in the middle of the interior of the shell.

As an optional technical solution of the embodiments of the present application, the first reinforcing portion and the body portion define a plurality of flow guide spaces arranged in the second direction and in communication with each other, the flow guide spaces are in communication with the liquid injection area, the blocking member is provided with second through holes, and the second through holes each connects the interior of the shell and a corresponding flow guide space; and the flow guide space and the second through hole form the flow guide channel.

In the foregoing technical solution, the fluid medium is blocked by the blocking member after passing through the liquid injection hole, a portion of the fluid medium enters the interior of the shell through the first through holes, while the other portion of the fluid medium flows to the flow guide space and enters the interior of the shell through the second through holes. In this case, the plurality of flow guide spaces and the plurality of second through holes form flow guide channels, which simply and conveniently guide a portion of the fluid medium towards the second direction, so as to accelerate the flowing of the fluid medium towards the second direction and improve the liquid injection efficiency.

As an optional technical solution of the embodiments of the present application, the first reinforcing portion includes a plurality of transverse bars arranged at intervals in the second direction, every two adjacent transverse bars and the body portion define a flow guide space, the transverse bar is provided with a third through hole, and the third through hole connects the two adjacent flow guide spaces or connects one flow guide space and the liquid injection area.

In the foregoing technical solution, the plurality of transverse bars arranged at intervals in the second direction can reinforce the blocking member, so that the blocking member has enough strength to support the electrode assembly. Each transverse bar is provided with a third through hole, and every two adjacent transverse bars and the body portion form a flow guide space. In this case, the two adjacent flow guide spaces are in communication with each other, and the flow guide space closest to the liquid injection area is in communication with the liquid injection area, thereby facilitating the guidance of the fluid medium towards the second direction.

As an optional technical solution of the embodiments of the present application, the liquid injection hole includes a first hole segment and a second hole segment, and the end cover assembly includes an end cover and an insulating member; the end cover is used for closing the opening, and the first hole segment is disposed on the end cover; the insulating member is located on a side, facing the electrode assembly, of the end cover, and the second hole segment is disposed at a position of the insulating member that corresponds to the first hole segment; and the blocking member blocks an end, away from the first hole segment, of the second hole segment.

In the foregoing technical solution, the first hole segment is disposed on the end cover to facilitate liquid injection, and the second hole segment is disposed at the position of the insulating member that corresponds to the first hole segment, so that the fluid medium can directly enter the second hole segment after passing through the first hole segment to increase its flow rate and improve the liquid injection efficiency. In addition, the second hole segment is disposed on the insulating member, and the blocking member blocks the second hole segment, whereby the structure of the insulating member can be simplified and the insulating member is easy to manufacture. The blocking member is disposed alone to block the second hole segment, so that the size and structure of the blocking member are not limited. For example, the area of the blocking member may be made larger to achieve a better blocking effect.

As an optional technical solution of the embodiments of the present application, there is a gap between the blocking member and the end cover assembly or the shell, and the gap is used for allowing the fluid medium to flow to the interior of the shell.

In the foregoing technical solution, by spacing the blocking member from the end cover assembly or the shell, the fluid medium can bypass the blocking member from the gap and enter the interior of the shell after passing through the liquid injection hole, thereby simplifying the structure of the blocking member.

As an optional technical solution of the embodiments of the present application, a concave portion is formed on the side, facing the electrode assembly, of the end cover assembly; a convex portion is formed on the side, away from the electrode assembly, of the end cover assembly; and the convex portion corresponds to the concave portion, the liquid injection hole is disposed at the convex portion, the blocking member is at least partially accommodated in the concave portion, and there is the gap between the blocking member and a wall of the concave portion.

In the foregoing technical solution, the concave portion is formed on the side, facing the electrode assembly, of the end cover assembly, and the blocking member is at least partially accommodated in the concave portion, thereby increasing energy density. Because the blocking member is at least partially accommodated in the concave portion, the blocking member can be spaced from the wall of the concave portion to allow the fluid medium to pass through the blocking member and enter the interior of the shell.

In a second aspect, an embodiment of the present application further provides a battery, which includes a box body and the foregoing battery cell(s), where the battery cell(s) is accommodated in the box body.

As an optional technical solution of the embodiments of the present application, the end cover assembly is disposed on a side, near a bottom wall of the box body, of the battery cell.

In the foregoing technical solution, the end cover assembly is disposed on the side, near the bottom wall of the box body, of the battery cell, that is, the battery cell is inverted inside the box body.

In a third aspect, an embodiment of the present application further provides an electrical device, which includes at least one foregoing battery, where the at least one battery is used for providing electrical energy.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of the battery cell provided by some embodiments of the present application;
FIG. 5 is a schematic top view of the battery cell provided by some embodiments of the present application;
FIG. 6 is a cross-sectional view taken along line A-A in FIG. 5;
FIG. 7 is a cross-sectional view taken along line B-B in FIG. 6;
FIG. 8 is a schematic diagram of a front structure of a blocking member provided by some embodiments of the present application;
FIG. 9 is a schematic diagram of a back structure of the blocking member provided by some embodiments of the present application;
FIG. 10 is a schematic diagram of a front structure of a blocking member provided by other embodiments of the present application;
FIG. 11 is a schematic diagram of a back structure of the blocking member provided by other embodiments of the present application;
FIG. 12 is a schematic diagram of a front structure of a blocking member provided by still other embodiments of the present application;
FIG. 13 is a schematic diagram of a back structure of the blocking member provided by still other embodiments of the present application;
FIG. 14 is a schematic top view of a battery cell provided by still other embodiments of the present application;
FIG. 15 is a cross-sectional view taken along line C-C in FIG. 14;
FIG. 16 is a cross-sectional view taken along line D-D in FIG. 15;
FIG. 17 is a schematic diagram of a front structure of a blocking member provided by still other embodiments of the present application; and
FIG. 18 is a schematic diagram of a back structure of the blocking member provided by still other embodiments of the present application.

Reference numerals: 10 - box body; 11 - first portion; 12 - second portion; 20 - battery cell; 21 - end cover assembly; 211 - end cover; 2111 - convex portion; 212 - liquid injection hole; 2121 - first hole segment; 2122 - second hole segment; 213 - electrode terminal; 214 - pressure relief mechanism; 215 - insulating member; 2151 - concave portion; 22 - electrode assembly; 221 - main body; 222 - tab; 23 - shell; 24 - blocking member; 241 - body portion; 2411 - first through hole; 2412 - second through hole; 2413 - gap; 242 - connecting portion; 243 - wing portion; 244 - separation portion; 245 - liquid injection area; 246 - pressure relief area; 2461 - pressure relief hole; 247 - first reinforcing portion; 2471 - transverse bar; 2472 - longitudinal bar; 2473 - flow guide space; 2474 - third through hole; 248 - second reinforcing portion; 25 - adapter; 100 - battery; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box body used for packaging one or more battery cells. The box body may prevent liquid or other foreign matters from affecting charging or discharging of the battery cells.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive sub-tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative sub-tab. A material of the negative electrode current collector may be copper, and a negative electrode active material may be carbon, silicon, or the like. In order to ensure that no fusing occurs when high current passes through, there is a plurality of positive sub-tabs laminated together, and there is a plurality of negative sub-tabs laminated together. A material of the separator may be polypropylene (PP), polyethylene (PE), or the like. Moreover, the electrode assembly may be of a wound structure or a laminated structure, and the embodiments of the present application are not limited thereto.

At present, in view of the development of the market situation, use of batteries is increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of the application fields of batteries, their market demand is also increasing.

The development of battery technologies needs to consider various design factors simultaneously, such as service life, energy density, discharge capacity, charge and discharge rates, and other performance parameters of batteries. In addition, safety of the batteries also needs to be considered. However, the safety of the existing batteries is poor.

The inventor further studied and found that a battery production process includes a liquid injection step. The liquid injection step refers to a process of controlling an amount and injection time of a liquid electrolyte to inject the liquid electrolyte from a liquid injection hole into a battery. In the liquid injection step, an electrolytic solution easily impacts a separator, so that the separator is folded inward (bent inward). As a result, positive and negative electrode sheets are prone to overlap, resulting in a short circuit. In severe cases, a fire or even explosion may occur, leading to poor safety of a battery cell.

In view of this, an embodiment of the present application provides a battery cell. The battery cell includes a shell, an electrode assembly, an end cover assembly, and a blocking member. The shell has an opening. The electrode assembly is accommodated in the shell. The end cover assembly is used for closing the opening, and the end cover assembly is provided with a liquid injection hole. The blocking member is provided separated from the end cover assembly and located on a side, facing the electrode assembly, of the end cover assembly. The blocking member is configured to at least partially block the liquid injection hole and allow a fluid medium to flow through the blocking member to an interior of the shell.

The battery cell has the blocking member that at least partially blocks the liquid injection hole, and the fluid medium is at least partially blocked by the blocking member after passing through the liquid injection hole during liquid injection, so that at least a portion of the fluid medium passes through the blocking member (to change its flow direction) before entering the interior of the shell. In this case, impact force of the fluid medium is weakened, the fluid medium is unlikely to impact the electrode assembly, and a separator is less prone to inward folding to cause a short circuit, thereby improving safety of the battery cell.

In addition, the blocking member is provided separated from the end cover assembly, so that a size and structure of the blocking member are not limited by the end cover assembly. For example, the blocking member may be made larger to achieve a better blocking effect.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, or the like. The spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle 1000 as an electrical device.

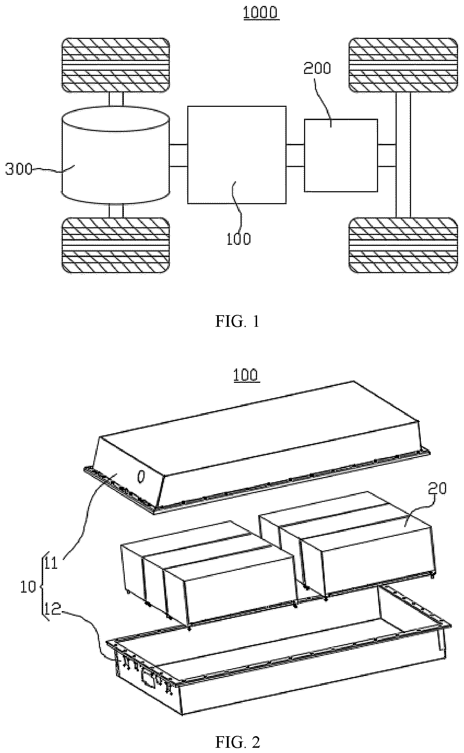

Referring to FIG. 1, FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided in some embodiments of the present application. The battery 100 includes a box body 10 and battery cells 20, where the battery cells 20 are accommodated in the box body 10. The box body 10 is used for providing an accommodating space for the battery cells 20, and the box body 10 may have many structures. In some embodiments, the box body 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box body 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box body 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box body 10. The battery 100 may further include other structures, for example, the battery 100 may further include a current collecting component for achieving electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cell 20 may be cylindrical, flat, cuboid, or in other shapes.

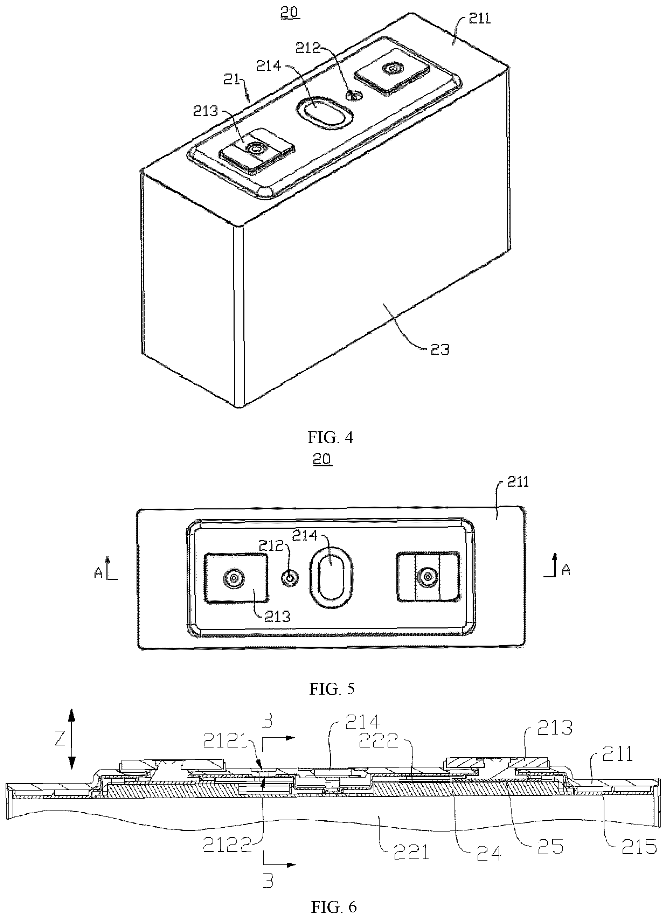

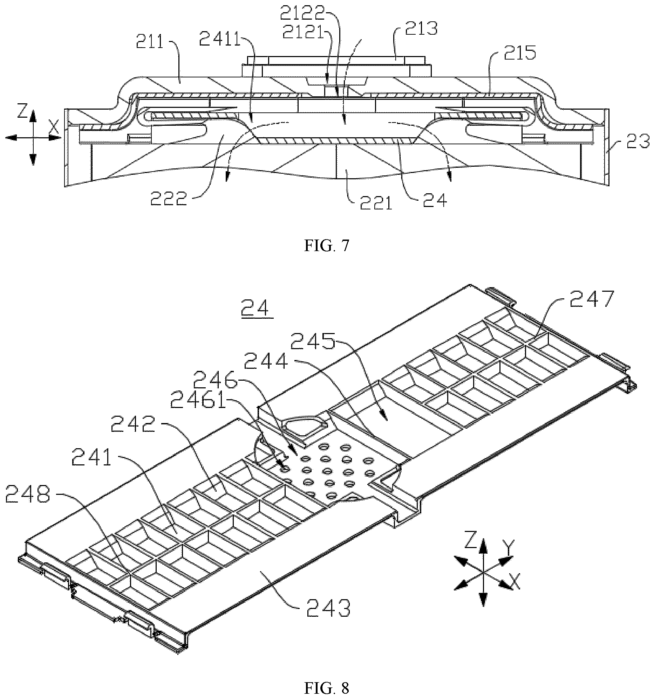

Referring to FIGs. 3, 4, 5, 6 and 7, FIG. 3 is an exploded view of the battery cell 20 provided by some embodiments of the present application. FIG. 4 is a schematic structural diagram of the battery cell 20 provided by some embodiments of the present application. FIG. 5 is a schematic top view of the battery cell 20 provided by some embodiments of the present application. FIG. 6 is a cross-sectional view taken along line A-A in FIG. 5. FIG. 7 is a cross-sectional view taken along line B-B in FIG. 6. An embodiment of the present application provides a battery cell 20. The battery cell 20 includes a shell 23, an electrode assembly 22, an end cover assembly 21, and a blocking member 24. The shell 23 has an opening. The electrode assembly 22 is accommodated in the shell 23. The end cover assembly 21 is used for closing the opening, and the end cover assembly 21 is provided with a liquid injection hole 212. The blocking member 24 is provided separated from the end cover assembly 21 and located on a side, facing the electrode assembly 22, of the end cover assembly 21. The blocking member 24 is configured to at least partially block the liquid injection hole 212 and allow a fluid medium to flow through the blocking member 24 to an interior of the shell 23.

The end cover assembly 21 includes an end cover 211. The end cover 211 refers to a component that is closed to the opening of the shell 23 to isolate an internal environment of the battery cell 20 from an external environment. Unlimitedly, a shape of the end cover 211 may adapt to that of the shell 23 to fit the shell 23. Optionally, the end cover 211 may be made of a material with certain hardness and strength (such as aluminum alloy). In this case, the end cover 211 is less prone to deformation during extrusion and deformation, so that the battery cell 20 can have higher structural strength and its safety can be improved. A material of the end cover 211 may be various, such as copper, iron, aluminum, stainless steel, aluminum alloy, or plastic, and is not specially limited in the embodiments of the present application. Optionally, the end cover assembly 21 further includes an electrode terminal 213, and the electrode terminal 213 is disposed on the end cover 211. The electrode terminal 213 may be used for electrical connection with the electrode assembly 22 to output or input electrical energy of the battery cell 20. Optionally, the end cover assembly 21 further includes a pressure relief mechanism 214, the pressure relief mechanism 214 is disposed on the end cover 211, and the pressure relief mechanism 214 is opened when internal pressure or temperature of the battery cell 20 reaches a detonation pressure to release the internal pressure of the battery cell 20. In some embodiments, the end cover assembly 21 further includes an insulating member 215, the insulating member 215 is disposed on an inner side of the end cover 211, and the insulating member 215 may be used for isolating electrical connection components inside the shell 23 from the end cover 211 to reduce a risk of short-circuiting. For example, the insulating member 215 may be made of plastic, rubber, or the like.

The shell 23 is a component fitting the end cover 211 to form an internal environment of the battery cell 20, where the formed internal environment may be used for accommodating the electrode assembly 22, an electrolytic solution, and other components. The shell 23 and the end cover 211 may be independent components, the shell 23 may be provided with an opening, and the cover body 211 is closed to the opening to form the internal environment of the battery cell 20. Unlimitedly, the end cover 211 and the shell 23 may be integrated. Specifically, the end cover 211 and the shell 23 may form a common joint surface before other components are put into the shell. When the interior of the shell 23 is to be encapsulated, the end cover 211 is closed to the shell 23. The shell 23 may be in various shapes and sizes, such as cuboid, cylinder, or hexagonal prism. Specifically, the shape of the shell 23 may be determined according to a specific shape and size of the electrode assembly 22. A material of the shell 23 may be various, such as copper, iron, aluminum, stainless steel, aluminum alloy, or plastic, and is not specially limited in the embodiments of the present application.

The electrode assembly 22 is a component that undergoes electrochemical reactions in the battery cell 20. The shell 23 may contain one or more electrode assemblies 22. The electrode assembly 22 is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute the main body 221 of the electrode assembly 22, while portions of the positive electrode sheet and the negative electrode sheet that do not contain active materials constitute respective sub-tabs. In order to ensure that no fusing occurs when high current passes through, there is a plurality of sub-tabs laminated together to form the tab 222. The positive tab and the negative tab may be jointly located at one end of the main body 221 or separately located at two ends of the main body 221. In charging and discharging processes of the battery 100, positive and negative electrode active materials react with an electrolytic solution, and the tab 222 is connected to the electrode terminal 213 to form a current circuit. The tab 222 protrudes from the main body 221 to facilitate connection with the electrode terminal 213, so as to output electrical energy of the battery cell 20 or input electrical energy to the battery cell 20.

The liquid injection hole 212 is a through hole disposed in the end cover assembly 21, and the liquid injection hole 212 is in communication with the interior and exterior of the battery cell 20 to allow injection of the fluid medium into the interior of the battery cell 20 from the liquid injection hole 212.

The blocking member 24 is a component for at least partially blocking the liquid injection hole 212. The blocking member 24 is located inside the shell 23 and on the side, facing the electrode assembly 22, of the end cover assembly 21. In a thickness direction of the end cover assembly 21 (Z direction shown in FIG. 6 and FIG. 7), a projection of the blocking member 24 on the end cover assembly 21 at least partially covers the liquid injection hole 212.

The expression "the blocking member 24 is configured to at least partially block the liquid injection hole 212" includes two schemes: the blocking member 24 blocks a portion of the liquid injection hole 212, and the blocking member 24 completely blocks the liquid injection hole 212. It should be noted that when the blocking member 24 blocks a portion of the liquid injection hole 212, the area of the blocking member 24 that does not block the liquid injection hole 212 can be minimized as much as possible, so that the fluid medium is unlikely to pass through an unblocked portion to reduce a risk of flushing the electrode assembly 22 by the fluid medium.

The expression "the blocking member 24 is provided separated from the end cover assembly 21" indicates that the blocking member 24 and the end cover assembly 21 are independent components when receiving materials. After assembly, the blocking member 24 may be connected to the end cover assembly 21, such as by clamping or welding. Of course, after assembly, the blocking member 24 may alternatively be disconnected from the end cover assembly 21. For example, the blocking member 24 abuts against the end cover assembly 21.

The expression "the blocking member 24 is configured to at least partially block the liquid injection hole 212 and allow a fluid medium to flow through the blocking member 24 to an interior of the shell 23" indicates that the blocking member 24 partially or completely blocks the liquid injection hole 212, but does not prevent the fluid medium from entering the interior of the shell 23 (or does not prevent the fluid medium from flowing to the electrode assembly 22), that is, by partially or completely blocking the liquid injection hole 212, the fluid medium at least partially collides with the blocking member 24 after passing through the liquid injection hole 212, then the flow direction of at least a portion of the fluid medium is changed, the impact force of the fluid medium is reduced, and ultimately, at least the portion of the fluid medium still passes through the blocking member 24 (bypasses the blocking member 24) and enters the interior of the shell 23 (or flows to the electrode assembly 22).

The fluid medium refers to a medium that can flow. For the battery cell 20, the fluid medium may be an electrolytic solution.

The battery cell 20 has the blocking member 24 that at least partially blocks the liquid injection hole 212, and the fluid medium is at least partially blocked by the blocking member 24 after passing through the liquid injection hole 212 during liquid injection, so that at least a portion of the fluid medium passes through the blocking member 24 (to change its flow direction) before entering the interior of the shell 23. In this case, the impact force of the fluid medium is weakened, the fluid medium is unlikely to impact the electrode assembly 22, and the separator is less prone to inward folding to cause a short circuit, thereby improving safety of the battery cell 20. The blocking member 24 is provided separated from the end cover assembly 21, so that a size and structure of the blocking member 24 are not limited by the end cover assembly 21. For example, the blocking member 24 may be made larger to achieve a better blocking effect.

In some embodiments, the blocking member 24 is configured to completely block the liquid injection hole 212.

The blocking member 24 completely blocks the liquid injection hole 212, but does not prevent the fluid medium from entering the interior of the shell 23 (or does not prevent the fluid medium from flowing to the electrode assembly 22), that is, by completely blocking the liquid injection hole 212, the fluid medium must collide with the blocking member 24 after passing through the liquid injection hole 212, then the flow direction of the fluid medium is changed, the impact force of the fluid medium is reduced, and ultimately, the fluid medium still passes through the blocking member 24 (bypasses the blocking member 24) and enters the interior of the shell 23 (or flows to the electrode assembly 22).

The fluid medium is completely blocked by the blocking member 24 after passing through the liquid injection hole 212 during liquid injection, so that all the fluid medium must pass through the blocking member 24 (to change its flow direction) before entering the interior of the shell 23. In this case, the fluid medium is prevented from directly scouring the electrode assembly 22, the impact force of the fluid medium is weakened, and the separator is less prone to inward folding to cause a short circuit, thereby improving the safety of the battery cell 20.

In some embodiments, the blocking member 24 abuts against the electrode assembly 22.

The expression "the blocking member 24 abuts against the electrode assembly 22" indicates that the blocking member 24 has a surface in contact with the electrode assembly 22 and force acts on the surface. The surface, facing the electrode assembly 22, of the blocking member 24 may be in complete contact with the electrode assembly 22 or in partial contact with the electrode assembly 22.

The blocking member 24 abuts against the electrode assembly 22, the distance between the blocking member 24 and the electrode assembly 22 is short, the distance of free falling of the fluid medium after passing through the blocking member 24 and entering the interior of the shell 23 is short, the impact force of the fluid medium is unlikely to increase again, and the fluid medium is unlikely to impact the electrode assembly 22, thereby improving the safety of the battery cell 20.

In the prior art, in a scenario where the battery cell is inverted, the tab 222 is located below the main body 221, and the tab 222 will be subjected to gravity of the main body 221. The tab 222 formed by laminating a plurality of sub-tabs together is prone to bifurcation under the action of the gravity, and the bifurcated portions are easily inserted into the main body 221 and come into contact with the positive or negative electrode sheet in the main body 221 to cause short circuits, fires in severe cases, and even explosions, leading to poor safety of the battery cell 20.

The blocking member 24 abuts against the electrode assembly 22, and in the scenario that the battery cell is inverted, the blocking member 24 can further support the electrode assembly 22, so that the gravity of the main body 221 of the electrode assembly 22 is less prone to transmission to the tab 222 to cause bifurcate insertion of the tab 222, which improves the safety of the battery cell 20.

In other embodiments, the blocking member 24 is spaced from the electrode assembly 22.

The expression "the blocking member 24 is spaced from the electrode assembly 22" indicates that there is a gap between the blocking member 24 and the electrode assembly 22.

Since the blocking member 24 is spaced from the electrode assembly 22, the fluid medium can smoothly enter the interior of the shell 23 after passing through the blocking member 24, and the flowing of the fluid medium will not be blocked by the electrode assembly 22.

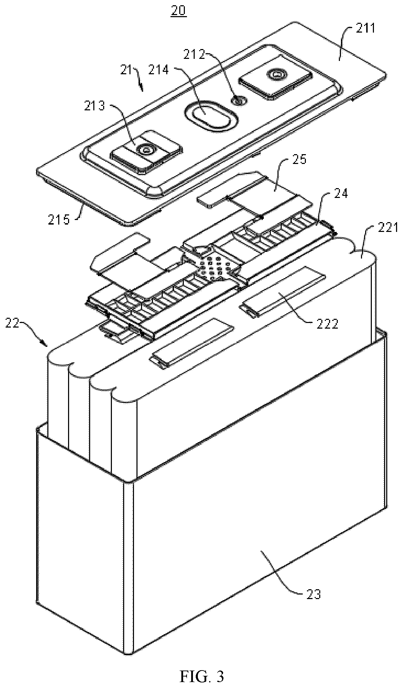

With reference to FIGs. 3, 4, 5, 6 and 7, in some embodiments, the electrode assembly 22 includes a main body 221 and a tab 222 protruding from the main body 221, and the tab 222 is bent around the blocking member 24.

The expression "the tab 222 is bent around the blocking member 24" indicates that the tab 222 forms a bend at an edge of the blocking member 24 from a side, facing the main body 221, of the blocking member 24 and extends to a side, away from the main body 221, of the blocking member 24. In some embodiments, the battery cell 20 includes an adapter 25, and the adapter 25 connects a portion of the tab 222 on the side, away from the main body 221, of the blocking member 24 and the electrode terminal 213 to electrically connect the tab 222 with the electrode terminal 213.

It should be noted that, in this embodiment of the present application, the tab 222 is bent around the blocking member 24, that is, the positive tab is bent around the blocking member 24, the negative tab is bent around the blocking member 24, or both the positive tab and the negative tab are bent around the blocking member 24. The tab 222 is bent around the blocking member 24, and the tab 222 may be in contact with an end of the blocking member 24 or not.

The tab 222 of the electrode assembly 22 is bent around the blocking member 24, so that in the scenario that the battery cell is inverted, the gravity of the main body 221 of the electrode assembly 22 is less prone to transmission to the tab 222 to cause bifurcate insertion of the tab 222, which improves the safety of the battery cell 20.

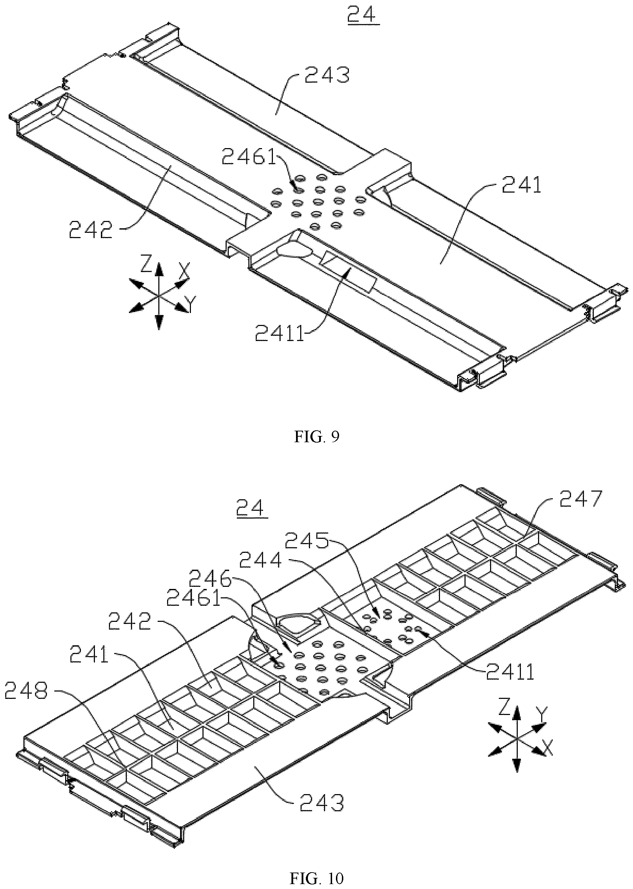

Referring to FIGs. 6, 7, 8 and 9, FIG. 8 is a schematic diagram of a front structure of the blocking member 24 provided by some embodiments of the present application. FIG. 9 is a schematic diagram of a back structure of the blocking member 24 provided by some embodiments of the present application. In some embodiments, the blocking member 24 is provided with a first through hole 2411 through which the fluid medium passes, and in the thickness direction of the end cover assembly 21, the projection of the liquid injection hole 212 on the blocking member 24 does not overlap with the first through hole 2411.

The first through hole 2411 connects the side, facing the end cover assembly 21, of the blocking member 24 and the side, away from the end cover assembly 21, of the blocking member 24 to allow the fluid medium to flow from the side, facing the end cover assembly 21, of the blocking member 24 to the side, away from the end cover assembly 21, of the blocking member 24.

The expression "in the thickness direction of the end cover assembly 21, the projection of the liquid injection hole 212 on the blocking member 24 does not overlap with the first through hole 2411" may also be understood as the first through hole 2411 is staggered with the liquid injection hole 212.

It should be noted that dashed lines in FIG. 7 represent a flow direction of the fluid medium, namely, a direction in which the fluid medium passes through the liquid injection hole 212 and enters the interior of the shell 23 from the first through hole 2411.

In the thickness direction of the end cover assembly 21, the projection of the liquid injection hole 212 on the blocking member 24 does not overlap with the first through hole 2411, so that the fluid medium is blocked by the blocking member 24 after passing through the liquid injection hole 212 to change its flow direction, and the fluid medium enters the interior of the shell 23 through the first through hole 2411 (passing through the blocking member 24) after the impact force of the fluid medium is weakened. If the projection of the liquid injection hole 212 on the blocking member 24 partially overlaps with the first through hole 2411 in the thickness direction of the end cover assembly 21, the blocking member 24 cannot play a blocking role, the fluid medium directly enters the interior of the shell 23 through the first through hole 2411 after passing through the liquid injection hole 212, and the impact force of the fluid medium cannot be weakened.

In some embodiments, the blocking member 24 is provided with a plurality of first through holes 2411, and the plurality of first through holes 2411 are provided surrounding the liquid injection hole 212.

The expression "the plurality of first through holes 2411 are provided surrounding the liquid injection hole 212" may also be understood as the plurality of first through holes 2411 are arranged at intervals on an outer side of the liquid injection hole 212 along a circumference of the liquid injection hole 212.

The blocking member 24 is provided with a plurality of first through holes 2411, and the plurality of first through holes 2411 are provided surrounding the liquid injection hole 212, which can increase the speed of entry of the fluid medium into the interior of the shell 23 to improve liquid injection efficiency.

With reference to FIGs. 5, 6, 7, 8 and 9, in some embodiments, the end cover assembly 21 is provided with a pressure relief mechanism 214, and the blocking member 24 has a pressure relief area 246 opposite to the pressure relief mechanism 214 and a liquid injection area 245 opposite to the liquid injection hole 212. The blocking member 24 is provided with a separation portion 244, and the separation portion 244 is used for separating the liquid injection area 245 and the pressure relief area 246.

The pressure relief area 246 is an area on the blocking member 24 that corresponds to the pressure relief mechanism 214. A pressure relief hole 2461 may be disposed in the pressure relief area 246 to facilitate flowing of gas inside the shell 23 to the pressure relief mechanism 214 through the pressure relief hole 2461. Optionally, a plurality of pressure relief holes 2461 may be disposed in the pressure relief area 246, and the plurality of pressure relief holes 2461 are evenly distributed in the pressure relief area 246 to accelerate the flowing of gas inside the shell 23 to the pressure relief mechanism 214, thereby increasing the pressure relief speed and improving the safety of the battery cell 20.

The liquid injection area 245 is an area on the blocking member 24 that corresponds to the liquid injection hole 212. The liquid injection area 245 is used for blocking the liquid injection hole 212. The fluid medium is blocked by the liquid injection area 245 after passing through the liquid injection hole 212, so that the fluid medium can enter the interior of the shell 23 after passing through the liquid injection area 245 (changing the flow direction).

The separation portion 244 is a component located between the pressure relief area 246 and the liquid injection area 245 to isolate the two. The separation portion 244 separates the pressure relief area 246 and the liquid injection area 245 to prevent the fluid medium flowing into the liquid injection area 245 from flowing to the pressure relief area 246.

By configuring the pressure relief area 246 opposite to the pressure relief mechanism 214, the gas inside the shell 23 flows to the pressure relief mechanism 214 through the pressure relief area 246, so as to achieve pressure relief. The liquid injection area 245 is opposite to the liquid injection hole 212 to block the liquid injection hole 212. The fluid medium is blocked by the liquid injection area 245 after passing through the liquid injection hole 212, so that the fluid medium can enter the interior of the shell 23 after passing through the liquid injection area 245 (changing the flow direction). The impact force of the fluid medium is weakened, so that the fluid medium is unlikely to impact the electrode assembly 22 and the separator is less prone to inward folding to cause a short circuit. By configuring the separation portion 244 to separate the pressure relief area 246 from the liquid injection area 245, the fluid medium is prevented from entering the pressure relief area 246 during liquid injection to affect a pressure relief function of the pressure relief area 246 (if the high-temperature fluid medium enters the pressure relief area 246, material properties of the pressure relief area 246 may be affected, so that the pressure relief area 246 cannot release pressure normally).

With reference to FIGs. 5, 6, 7, 8 and 9, in some embodiments, the blocking member 24 has a body portion 241, a connecting portion 242, and a wing portion 243. The body portion 241 blocks the liquid injection hole 212, the tab 222 is bent around the wing portion 243, and the connecting portion 242 connects the body portion 241 and the wing portion 243. **In** the thickness direction of the end cover 211, a surface, facing the main body 221, of the wing portion 243 is further away from the main body 221 than a surface, facing the main body 221, of the body portion 241.

The body portion 241 is a portion of the blocking member 24 that blocks the liquid injection hole 212. The liquid injection area 245 may be regarded as an area on the body portion 241 that is opposite to the liquid injection hole 212. Optionally, the body portion 241 is a portion of the blocking member 24 that is closest to the electrode assembly 22. The body portion 241 may abut against the electrode assembly 22, or may be spaced from the electrode assembly 22.

The wing portion 243 is a portion of the blocking member 24 for winding the tab 222. Optionally, both the body portion 241 and the wing portion 243 are plate-like. The plate-like body portion 241 can well block the fluid medium, reduce the impact force of the fluid medium, and also support the body portion 221 when the battery cell is inverted. The plate-like wing portion 243 facilitates the bending of the tab 222 around.

The connecting portion 242 is a portion of the blocking member 24 for connecting the body portion 241 and the wing portion 243.

The expression "In the thickness direction of the end cover 211, a surface, facing the main body 221, of the wing portion 243 is further away from the main body 221 than a surface, facing the main body 221, of the body portion 241" indicates that the surface, facing the main body 221, of the body portion 241 is closer to the main body 221 than the surface, facing the main body 221, of the wing portion 243.

The body portion 241 blocks the liquid injection hole 212, the fluid medium is blocked by the body portion 241 after passing through the liquid injection hole 212, and the impact force of the fluid medium is weakened, so that the fluid medium is unlikely to impact the electrode assembly 22 and the separator is less prone to inward folding to cause a short circuit. The tab 222 of the electrode assembly 22 is bent around the wing portion 243, and in the scenario where the battery cell is inverted, the body portion 241 supports the main body 221 of the electrode assembly 22, so that the gravity of the main body 221 of the electrode assembly 22 is less prone to transmission to the tab 222 to cause bifurcate insertion of the tab 222, which improves the safety of the battery cell 20. In the thickness direction of the end cover 211, the surface, facing the main body 221, of the wing portion 243 is further away from the main body 221 than the surface, facing the main body 221, of the body portion 241. In this case, an accommodating space is formed between the wing portion 243 and the main body 221, and the accommodating space is used for extending the tab 222 to well shape the tab 222, so that the tab 222 is less prone to bifurcate insertion, which improves the safety of the battery cell 20.

In some embodiments, the blocking member 24 includes two connecting portions 242 and two wing portions 243. In a first direction, the two connecting portions 242 are located on two sides of the body portion 241. Each connecting portion 242 connects the body portion 241 and a wing portion 243. The first direction is perpendicular to the thickness direction of the end cover assembly 21.

The first direction is a direction perpendicular to the thickness direction of the end cover assembly 21. With reference to FIG. 8 and FIG. 9, the first direction may be an X direction shown in the figures.

The two connecting portions 242 connect the two wing portions 243 with the body portion 241, and the two wing portions 243 may be separately used for winding two tabs 222 located on two sides of the body portion 241 in the first direction to avoid bifurcate insertion of the tabs 222, thereby improving the safety of battery cell 20.

By configuring the two connecting portions 242 and the two wing portions 243, the tabs 222 can extend out from the two sides of the body portion 241 and bend around the two wing portions 243 separately, so that the tabs 222 of the electrode assembly 22 are well shaped and protected.

In some embodiments, the first through hole 2411 is disposed at the body portion 241 or the connecting portion 242.

With reference to FIG. 8 and FIG. 9, in some embodiments, the first through hole 2411 is disposed at the connecting portion 242. In this case, the body portion 241 may abut against the electrode assembly 22.

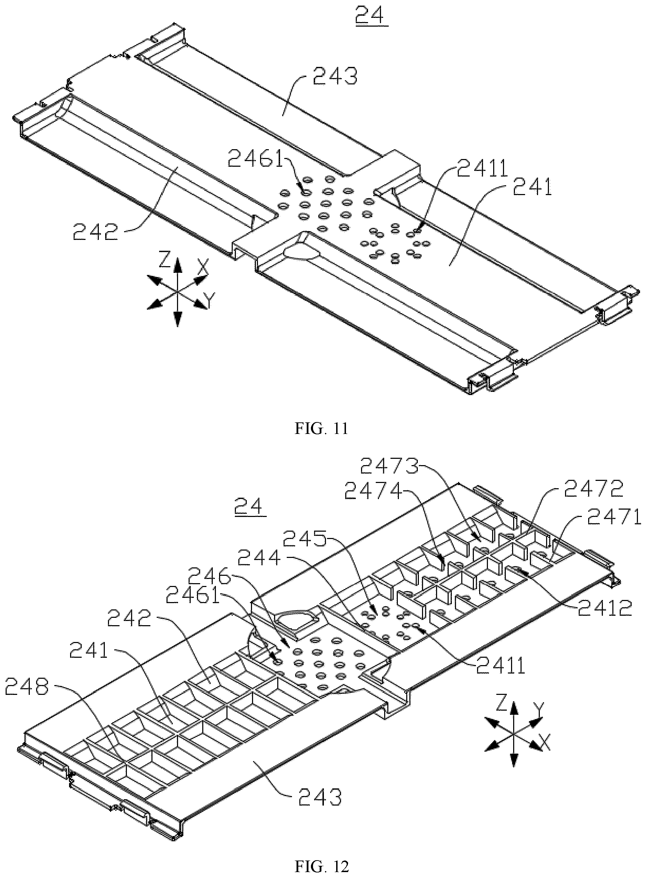

Referring to FIG. 10 and FIG. 11, FIG. 10 is a schematic diagram of a front structure of the blocking member 24 provided by other embodiments of the present application. FIG. 11 is a schematic diagram of a back structure of the blocking member 24 provided by other embodiments of the present application. In other embodiments, the first through hole 2411 is disposed at the body portion 241. In this case, the body portion 241 may be spaced from the electrode assembly 22.

Optionally, the body portion 241 is provided with a plurality of first through holes 2411, and the plurality of first through holes 2411 are provided surrounding the liquid injection hole 212.

When the blocking member 24 abuts against the electrode assembly 22, the first through hole 2411 may be disposed at the connecting portion 242 to prevent the electrode assembly 22 from blocking the first through hole 2411 and ensure that the fluid medium smoothly enters the interior of the shell 23. When the blocking member 24 is spaced from the electrode assembly 22, the first through hole 2411 may be disposed at the body portion 241, the distance between the first through hole 2411 and the electrode assembly 22 is short, the distance of free falling of the fluid medium after passing through the first through hole 2411 and entering the interior of the shell 23 is short, the impact force of the fluid medium is unlikely to increase again, and the fluid medium is unlikely to impact the electrode assembly 22, thereby improving the safety of the battery cell 20.

With reference to FIG. 10 and FIG. 11, in some embodiments, the blocking member 24 further includes a first reinforcing portion 247, and the first reinforcing portion 247 is disposed on a side, away from the pressure relief area 246, of the separation portion 244 in a second direction. The first reinforcing portion 247 connects the body portion 241 and the two connecting portions 242. A side, closest to the separation portion 244, of the first reinforcing portion 247, together with the separation portion 244, defines the liquid injection area 245. Any two of the first direction, the second direction, and the thickness direction of the end cover assembly 21 are perpendicular to each other.

The second direction is perpendicular to both the first direction and the thickness direction of the end cover assembly 21. The second direction may be a Y direction shown in FIG. 10 and FIG. 11.

The first reinforcing portion 247 is located on a side, away from the pressure relief area 246, of the separation portion 244 in the second direction, and connects the body portion 241 and the two connecting portions 242 to increase the strength of the blocking member 24. The first reinforcing portion 247 may be a reinforcing bar, a reinforcing rib, or the like.

The expression "A side, closest to the separation portion 244, of the first reinforcing portion 247, together with the separation portion 244, defines the liquid injection area 245" indicates that the liquid injection area 245 is located between the first reinforcing portion 247 and the separation portion 244.

The first reinforcing portion 247 increases the strength of the blocking member 24, so that the blocking member 24 has enough strength to support the main body 221 when the battery cell is inverted.

With reference to FIG. 10 and FIG. 11, in some embodiments, the blocking member 24 further includes a second reinforcing portion 248, and the second reinforcing portion 248 is disposed on a side, facing the pressure relief area 246, of the separation portion 244 in the second direction. The second reinforcing portion 248 connects the body portion 241 and the two connecting portions 242. A side, closest to the separation portion 244, of the second reinforcing portion 248, together with the separation portion 244, defines the pressure relief area 246.

The second reinforcing portion 248 is located on a side, facing the pressure relief area 246, of the separation portion 244 in the second direction, and connects the body portion 241 and the two connecting portions 242 to increase the strength of the blocking member 24. The second reinforcing portion 248 may be a reinforcing bar, a reinforcing rib, or the like.

The expression "A side, closest to the separation portion 244, of the second reinforcing portion 248, together with the separation portion 244, defines the pressure relief area 246" indicates that the pressure relief area 246 is located between the second reinforcing portion 248 and the separation portion 244.

The second reinforcing portion 248 increases the strength of the blocking member 24, so that the blocking member 24 has enough strength to support the main body 221 when the battery cell is inverted.

In some embodiments, the blocking member 24 is provided with a flow guide channel, and the flow guide channel is used for guiding the fluid medium towards the second direction.

The flow guide channel is used for guiding the fluid medium passing through the liquid injection hole 212 towards the second direction. In the second direction, in the presence of the separation portion 244, the flow guide channel may guide the fluid medium from the pressure relief area 246 to the liquid injection area 245.

The flow guide channel guides the fluid medium towards the second direction, so that the fluid medium is not only concentrated in the middle of the interior of the shell 23.

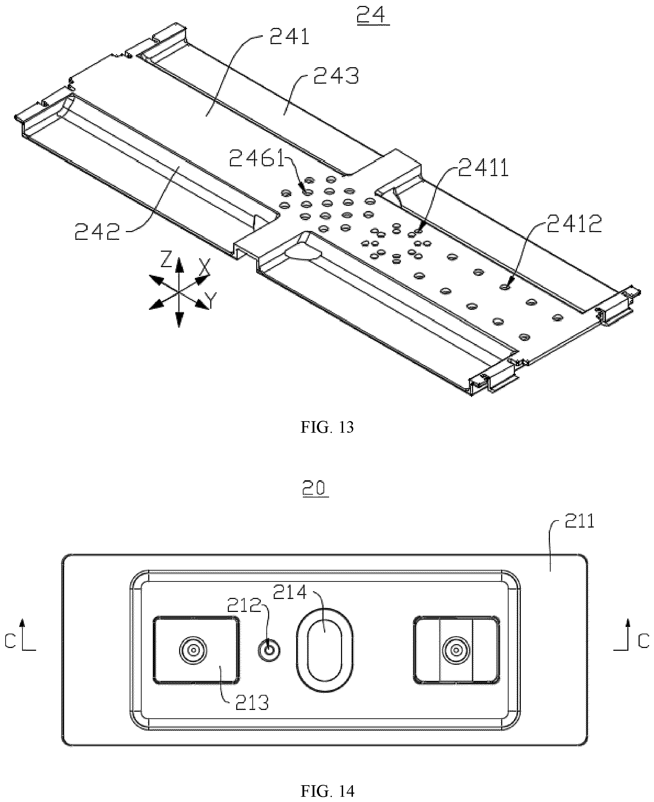

Referring to FIG. 12 and FIG. 13, FIG. 12 is a schematic diagram of a front structure of a blocking member 24 provided by still other embodiments of the present application. FIG. 13 is a schematic diagram of a back structure of the blocking member 24 provided by still other embodiments of the present application. In still other embodiments, the first reinforcing portion 247 and the body portion 241 define a plurality of flow guide spaces 2473 arranged in the second direction and in communication with each other. The flow guide spaces 2473 are in communication with the liquid injection area 245. The blocking member 24 is provided with second through holes 2412, and the second through holes 2412 connects the interior of the shell 23 and corresponding flow guide spaces 2473. The flow guide space 2473 and the second through hole 2412 form a flow guide channel.

The blocking member 24 has a plurality of flow guide spaces 2473, the plurality of flow guide spaces 2473 are arranged at intervals in the second direction, and the two adjacent flow guide spaces 2473 are in communication with each other. The flow guide spaces 2473 closest to the liquid injection area 245 among the plurality of flow guide spaces 2473 are in communication with the liquid injection area 245. The plurality of flow guide spaces 2473 are defined by the first reinforcing portion 247 and the body portion 241.

The second through hole 2412 is a through hole penetrating two opposite surfaces of the blocking member 24 in the thickness direction of the end cover assembly 21, and the second through hole 2412 connects the flow guide space 2473 and the interior of the shell 23. The second through hole 2412 may be disposed at the body portion 241 or the connecting portion 242. Understandably, because there is a plurality of flow guide spaces 2473, the blocking member 24 is correspondingly provided with a plurality of second through holes 2412. The number of the second through holes 2412 is greater than or equal to that of the flow guide spaces 2473. Optionally, the plurality of second through holes 2412 are arranged at intervals in the second direction.

The fluid medium is blocked by the blocking member 24 after passing through the liquid injection hole 212, a portion of the fluid medium enters the interior of the shell 23 through the first through holes 2411, while the other portion of the fluid medium flows to the flow guide space 2473 and enters the interior of the shell 23 through the second through holes 2412. In this case, the plurality of flow guide spaces 2473 and the plurality of second through holes 2412 form flow guide channels, which simply and conveniently guide a portion of the fluid medium towards the second direction, so as to accelerate the flowing of the fluid medium towards the second direction and improve the liquid injection efficiency.

In some embodiments, the first reinforcing portion 247 includes a plurality of transverse bars 2471 arranged at intervals in the second direction, and every two adjacent transverse bars 2471 and the body portion 241 define a flow guide space 2473. The transverse bar 2471 is provided with a third through hole 2474, and the third through hole 2474 connects two adjacent flow guide spaces 2473 or connects one flow guide space 2473 and the liquid injection area 245.

The transverse bar 2471 may be of a plate-like or rib-like structure extending in the first direction. The plurality of transverse bars 2471 are arranged at intervals in the second direction to define the plurality of flow guide spaces 2473 together with the body portion 241. Optionally, the first reinforcing portion 247 further includes longitudinal bars 2472, and the longitudinal bars 2472 extend in the second direction and are connected to the plurality of transverse bars 2471 to increase the strength of the blocking member 24.

The third through hole 2474 is a through hole disposed in the transverse bar 2471 and penetrating two opposite surfaces of the transverse bar 2471 in the second direction. The third through hole 2474 on the transverse bar 2471 closest to the liquid injection area 245 connects the liquid injection area 245 and the flow guide space 2473 adjacent to the liquid injection area 245, while the third through holes 2474 on the remaining transverse bars 2471 connect two connected flow guide spaces 2473.

The plurality of transverse bars 2471 arranged at intervals in the second direction can reinforce the blocking member 24, so that the blocking member 24 has enough strength to support the electrode assembly 22. Each transverse bar 2471 is provided with a third through hole 2474, and every two adjacent transverse bars 2471 and the body portion 241 form a flow guide space 2473. In this case, the two adjacent flow guide spaces 2473 are in communication with each other, and the flow guide space 2473 closest to the liquid injection area 245 is in communication with the liquid injection area 245, thereby facilitating the guidance of the fluid medium towards the second direction.

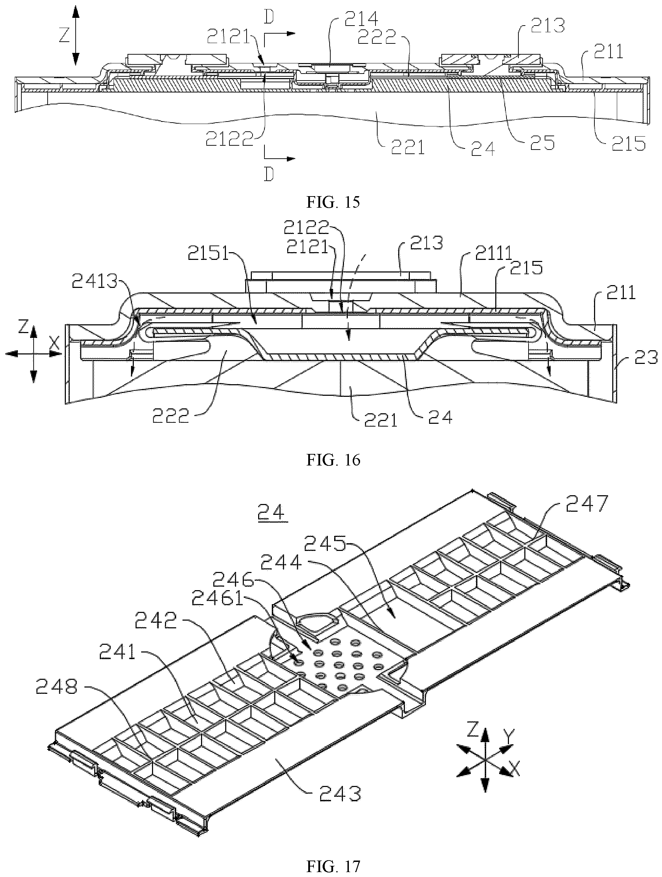

Referring to FIG. 14 and FIG. 15, FIG. 14 is a schematic top view of a battery cell 20 provided by still other embodiments of the present application. FIG. 15 is a cross-sectional view taken along line C-C in FIG. 14. In still other embodiments, the liquid injection hole 212 includes a first hole segment 2121 and a second hole segment 2122. The end cover assembly 21 includes an end cover 211 and an insulating member 215, the end cover 211 is used for closing the opening, and the first hole segment 2121 is disposed on the end cover 211. The insulating member 215 is located on a side, facing the electrode assembly 22, of the end cover 211, and the second hole segment 2122 is disposed at a position of the insulating member 215 that corresponds to the first hole segment 2121. The blocking member 24 blocks an end, away from the first hole segment 2121, of the second hole segment 2122.

The first hole segment 2121 is of a through hole structure formed on the end cover 211. The second hole segment 2122 is of a through hole structure formed on the insulating member 215. The second hole segment 2122 corresponds to the first hole segment 2121. The second hole segment 2122 is in communication with the first hole segment 2121. In this case, during liquid injection, the fluid medium can enter the side, facing the electrode assembly 22, of the end cover assembly 21 through the first hole segment 2121 and the second hole segment 2122 from the outside.

The first hole segment 2121 is disposed on the end cover 211 to facilitate liquid injection, and the second hole segment 2122 is disposed at the position of the insulating member 215 that corresponds to the first hole segment 2121, so that the fluid medium can directly enter the second hole segment 2122 after passing through the first hole segment 2121 to increase its flow rate and improve the liquid injection efficiency. In addition, the second hole segment 2122 is disposed on the insulating member 215, and the blocking member 24 blocks the second hole segment 2122, whereby the structure of the insulating member 215 can be simplified and the insulating member 215 is easy to manufacture. The blocking member 24 is disposed alone to block the second hole segment 2122, so that the size and structure of the blocking member 24 are not limited. For example, the area of the blocking member 24 may be made larger to achieve a better blocking effect.

In some embodiments, there is a gap 2413 between the blocking member 24 and the end cover assembly 21 or the shell 23, and the gap 2413 is used for allowing the fluid medium to flow to the interior of the shell 23.

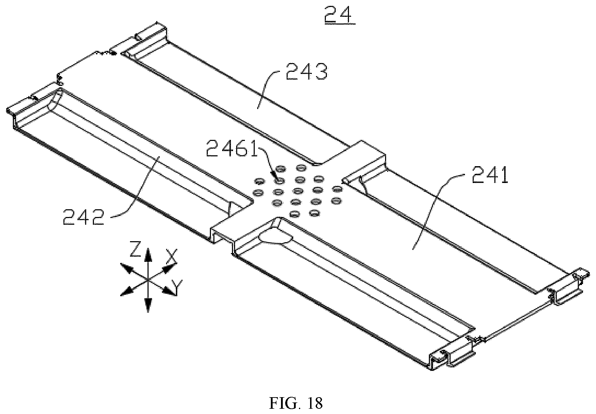

Referring to FIGs. 14, 15, 16, 17 and 18, FIG. 16 is a cross-sectional view taken along line D-D in FIG. 15. FIG. 17 is a schematic diagram of a front structure of a blocking member 24 provided by still other embodiments of the present application. FIG. 18 is a schematic diagram of a back structure of a blocking member 24 provided by still other embodiments of the present application. As shown in the figures, there is a gap 2413 between the blocking member 24 and the end cover assembly 21 to allow the fluid medium to flow to the interior of the shell 23. In this case, the blocking member 24 is not required to be provided with a through hole allowing the fluid medium to pass, but the fluid medium can flow to the interior of the shell 23, thereby increasing the strength of the blocking member 24 and enabling the blocking member 24 to better support the main body 221 in the scenario where the battery cell is inverted.

It should be noted that the dashed line in FIG. 16 represents a flow direction of the fluid medium, namely, a direction in which the fluid medium passes through the liquid injection hole 212 and enters the interior of the shell 23 from the gap 2413.

In other embodiments, there is a gap 2413 between the blocking member 24 and the shell 23 to allow the fluid medium to flow to the interior of the shell 23.

By spacing the blocking member 24 from the end cover assembly 21 or the shell 23, the fluid medium can bypass the blocking member 24 from the gap 2413 and enter the interior of the shell 23 after passing through the liquid injection hole 212, thereby simplifying the structure of the blocking member 24.

In some embodiments, a concave portion 2151 is formed on the side, facing the electrode assembly 22, of the end cover assembly 21, and a convex portion 2111 is formed on the side, away from the electrode assembly 22, of the end cover assembly 21. The convex portion 2111 corresponds to the concave portion 2151. The liquid injection hole 212 is disposed at the convex portion 2111. The blocking member 24 is at least partially accommodated in the concave portion 2151, and there is the gap 2413 between the blocking member 24 and a wall of the concave portion 2151.

The end cover assembly 21 includes an end cover 211 and an insulating member 215, the end cover 211 is used for closing the opening of the shell 23, and the insulating member 215 is used for insulating the end cover 211 and the electrode assembly 22. A groove is formed on a side, facing the electrode assembly 22, of the end cover 211, and the insulating member 215 is at least partially accommodated in the groove. The concave portion 2151 is formed on a side, facing the electrode assembly 22, of the insulating member 215, and the blocking member 24 is at least partially accommodated in the concave portion 2151. The convex portion 2111 is formed on a side, away from the electrode assembly 22, of the end cover 211, and the convex portion 2111 corresponds to the groove. Optionally, a protrusion is formed at the position where the insulating member 215 corresponds to the groove, the protrusion is partially accommodated in the groove, and the concave portion 2151 is formed inside the protrusion.

Because the blocking member 24 is at least partially accommodated in the concave portion 2151, the blocking member 24 can be spaced from the wall of the concave portion 2151, and the gap 2413 allowing the fluid medium to enter the interior of the shell 23 is formed between the blocking member 24 and the wall of the concave portion 2151.

The concave portion 2151 is formed on the side, facing the electrode assembly 22, of the end cover assembly 21, and the blocking member 24 is at least partially accommodated in the concave portion 2151, thereby increasing energy density. Because the blocking member 24 is at least partially accommodated in the concave portion 2151, the blocking member 24 can be spaced from the wall of the concave portion 2151 to allow the fluid medium to pass through the blocking member 24 and enter the interior of the shell 23.

An embodiment of the present application further provides a battery 100. The battery 100 includes a box body 10 and the foregoing battery cell 20, and the battery cell 20 is accommodated in the box body 10.

**In** some embodiments, the end cover assembly 21 is disposed on a side, near a bottom wall of the box body 10, of the battery cell 20.

The bottom wall of the box body 10 is a wall of the box body 10 opposite to an open end of the box body 10.

The end cover assembly 21 is disposed on the side, near the bottom wall of the box body 10, of the battery cell 20, that is, the battery cell 20 is inverted inside the box body 10.

An embodiment of the present application further provides an electrical device. The electrical device includes the foregoing battery 100, where the battery 100 is used for providing electrical energy.

According to some embodiments of the present application, reference is made to FIGs. 3 to 18.

An embodiment of the present application provides a battery cell 20. The battery cell 20 includes a shell 23, an electrode assembly 22, an end cover assembly 21, and a blocking member 24. The shell 23 has an opening. The electrode assembly 22 is accommodated in the shell 23. The end cover assembly 21 is used for closing the opening, and the end cover assembly 21 is provided with a liquid injection hole 212. The blocking member 24 is provided separated from the end cover assembly 21 and located on a side, facing the electrode assembly 22, of the end cover assembly 21. The electrode assembly 22 includes a main body 221 and a tab 222 protruding from the main body 221, and the tab 222 is bent around the blocking member 24. The blocking member 24 blocks the liquid injection hole 212, the blocking member 24 is provided with a first through hole 2411 configured to allow a fluid medium to pass therethrough, and in a thickness direction of the end cover assembly 21, a projection of the liquid injection hole 212 on the blocking member 24 does not overlap with the first through hole 2411.

The battery cell 20 has the blocking member 24 that blocks the liquid injection hole 212, and in the thickness direction of the end cover assembly 21, the projection of the liquid injection hole 212 on the blocking member 24 does not overlap with the first through hole 2411, so that the fluid medium is blocked by the blocking member 24 after passing through the liquid injection hole 212 to change its flow direction, and the fluid medium enters the interior of the shell 23 through the first through hole 2411 (passing through the blocking member 24) after impact force of the fluid medium is weakened. In this case, the impact force of the fluid medium is weakened, the fluid medium is unlikely to impact the electrode assembly 22, and the separator is less prone to inward folding to cause a short circuit, thereby improving safety of the battery cell 20. The blocking member 24 is provided separated from the end cover assembly 21, so that a size and structure of the blocking member 24 are not limited by the end cover assembly 21. For example, the blocking member 24 may be made larger to achieve a better blocking effect. The tab 222 of the electrode assembly 22 is bent around the blocking member 24, so that in the scenario that the battery cell is inverted, the gravity of the main body 221 of the electrode assembly 22 is less prone to transmission to the tab 222 to cause bifurcate insertion of the tab 222, which improves the safety of the battery cell 20.

A concave portion 2151 is formed on the side, facing the electrode assembly 22, of the end cover assembly 21, and a convex portion 2111 is formed on the side, away from the electrode assembly 22, of the end cover assembly 21. The convex portion 2111 corresponds to the concave portion 2151, the liquid injection hole 212 is disposed on the convex portion 2111, and the blocking member 24 is at least partially accommodated in the concave portion 2151. There is a gap 2413 between the blocking member 24 and a wall of the concave portion 2151, and the gap 2413 is used for allowing the fluid medium to flow to the interior of the shell 23 (in this case, the blocking member 24 may not be provided with the first through hole 2411). The concave portion 2151 is formed on the side, facing the electrode assembly 22, of the end cover assembly 21, and the blocking member 24 is at least partially accommodated in the concave portion 2151, thereby increasing energy density. Because the blocking member 24 is at least partially accommodated in the concave portion 2151, the blocking member 24 can be spaced from the wall of the concave portion 2151 to allow the fluid medium to pass through the blocking member 24 and enter the interior of the shell 23.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery cell, comprising:
a shell having an opening;
an electrode assembly accommodated in the shell;
an end cover assembly configured for closing the opening, wherein the end cover assembly is provided with a liquid injection hole; and
a blocking member provided separated from the end cover assembly and located on a side, facing the electrode assembly, of the end cover assembly, wherein the blocking member is configured to at least partially block the liquid injection hole and allow a fluid medium to flow therethrough to an interior of the shell.

2. The battery cell according to claim 1, wherein the blocking member is configured to completely block the liquid injection hole.

3. The battery cell according to claim 1 or 2, wherein the blocking member abuts against the electrode assembly.

4. The battery cell according to claim 1 or 2, wherein the blocking member is spaced from the electrode assembly.

5. The battery cell according to any one of claims 1-4, wherein the electrode assembly comprises a main body and a tab protruding from the main body, and the tab is bent around the blocking member.

6. The battery cell according to claim 5, wherein the blocking member is provided with a first through hole configured to allow a fluid medium to pass therethrough, and in a thickness direction of the end cover assembly, a projection of the liquid injection hole on the blocking member does not overlap with the first through hole.

7. The battery cell according to claim 6, wherein the blocking member is provided with a plurality of first through holes, and the plurality of first through holes are provided surrounding the liquid injection hole.

8. The battery cell according to claim 6 or 7, wherein the end cover assembly is provided with a pressure relief mechanism, and the blocking member has a pressure relief area opposite to the pressure relief mechanism and a liquid injection area opposite to the liquid injection hole; and
the blocking member is provided with a separation portion, and the separation portion is configured for separating the liquid injection area and the pressure relief area.

9. The battery cell according to claim 8, wherein the blocking member has a body portion, a connecting portion and a wing portion, the body portion blocks the liquid injection hole, the tab is bent around the wing portion, the connecting portion connects the body portion and the wing portion, and in the thickness direction of the end cover, a surface, facing the main body, of the wing portion is further away from the main body than a surface, facing the main body, of the body portion.

10. The battery cell according to claim 9, wherein the blocking member comprises two connecting portions and two wing portions, the two connecting portions are located on two sides of the body portion in a first direction, and each connecting portion connects the body portion and one corresponding wing portion; and
the first direction is perpendicular to the thickness direction of the end cover assembly.

11. The battery cell according to claim 10, wherein the first through hole is disposed at the body portion or the connecting portion.

12. The battery cell according to claim 10 or 11, wherein:
the blocking member further comprises a first reinforcing portion;
the first reinforcing portion is disposed on a side of the separation portion away from the pressure relief area in a second direction;
the first reinforcing portion connects the body portion and the two connecting portions;
a side, closest to the separation portion, of the first reinforcing portion, together with the separation portion, defines the liquid injection area; and
any two of the first direction, the second direction, and the thickness direction of the end cover assembly are perpendicular to each other.

13. The battery cell according to claim 12, wherein:
the blocking member further comprises a second reinforcing portion;
the second reinforcing portion is disposed on a side of the separation portion facing the pressure relief area in the second direction;
the second reinforcing portion connects the body portion and the two connecting portions; and
a side, closest to the separation portion, of the second reinforcing portion, together with the separation portion, defines the pressure relief area.

14. The battery cell according to claim 12 or 13, wherein the blocking member is provided with a flow guide channel, and the flow guide channel is configured for guiding the fluid medium towards the second direction.

15. The battery cell according to claim 14, wherein the first reinforcing portion and the body portion define a plurality of flow guide spaces arranged in the second direction and in communication with each other, the flow guide spaces are in communication with the liquid injection area, the blocking member is provided with second through holes, and the second through holes each connect the interior of the shell and one corresponding flow guide space; and
the flow guide spaces and the second through holes form flow guide channels.

16. The battery cell according to claim 15, wherein the first reinforcing portion comprises a plurality of transverse bars arranged at intervals in the second direction, every two adjacent transverse bars and the body portion define a flow guide space, each of the transverse bars is provided with a third through hole, and the third through hole connects two adjacent flow guide spaces or connects one flow guide space and the liquid injection area.

17. The battery cell according to any one of claims 6-16, wherein the liquid injection hole comprises a first hole segment and a second hole segment, and the end cover assembly comprises:
an end cover configured for closing the opening, wherein the first hole segment is disposed on the end cover; and
an insulating member located on a side, facing the electrode assembly, of the end cover, wherein the second hole segment is disposed at a position of the insulating member that corresponds to the first hole segment, and
the blocking member blocks an end, away from the first hole segment, of the second hole segment.

18. The battery cell according to any one of claims 1-5, wherein a gap is formed between the blocking member and the end cover assembly or the shell, and the gap is configured for allowing the fluid medium to flow to the interior of the shell.

19. The battery cell according to claim 18, wherein:
a concave portion is formed on the side, facing the electrode assembly, of the end cover assembly;
a convex portion is formed on the side, away from the electrode assembly, of the end cover assembly; and
the convex portion corresponds to the concave portion, the liquid injection hole is disposed at the convex portion, the blocking member is at least partially accommodated in the concave portion, and the gap is formed between the blocking member and a wall of the concave portion.

20. A battery, comprising:
a box body; and
a battery cell according to any one of claims 1-19, wherein the battery cell is accommodated in the box body.

21. The battery according to claim 20, wherein the end cover assembly is disposed on a side, near a bottom wall of the box body, of the battery cell.

22. An electrical device, comprising a battery according to any one of claims 20 and 21, wherein the battery is used for providing electrical energy.
